# EUROPEAN PATENT APPLICATION

(11) **EP 2 168 756 A1**
(43) Date of publication of application: **31.03.2010**
(21) Application number: 09171136.6
(22) Date of filing: 23.09.2009
(51) Int. Cl.: B29C 70/08, B29D 23/00, B32B 1/08, B32B 15/14

(54) **Method of forming flowbodies**

(30) Priority: 30.09.2008 US 242138
(71) Applicant: Honeywell International, Inc., Morristown NJ 07962 (US)
(72) Inventor: Stevenson, James F., Morristown, NJ 07962-2245 (US); Kington, Harry L., Morristown, NJ 07962-2245 (US)
(74) Representative: Buckley, Guy Julian

(57) **Abstract**

A method of forming flowbodies is provided. The method includes providing a first sheet (104) of a first material comprising a metal, providing a second sheet (106) of a second material comprising a composite, attaching a portion of the first sheet (104) to a first position on a preform (902), securing a portion of the second sheet (106) to a second position on the preform (902), and winding the first sheet (104) and the second sheet (106) around the preform (902) to form the first flowbody (100), the first flowbody (100) including a laminate (102) comprising alternating layers of the first sheet (104) and the second sheet.

## Description

### TECHNICAL FIELD

The inventive subject matter generally relates to flowbodies, and more particularly relates to methods of forming the flowbodies.

### BACKGROUND

Flowbodies, such as fans, bypass ducts, and the like may be manufactured from a variety of different materials. In particular, depending on the environment in which the flowbody is to be used, the flowbody may be made from a metal, a composite, such as an organic matrix composite, or a combination of both metal and composite (also known as a "hybrid composite"). In cases in which the flowbody comprises metal, the metal may be formed or machined into a specified shape. Flowbodies made from composites can be formed by hand laying sheets of composite materials over each other and impregnating the sheets with resin. Alternatively, the flowbodies may be produced by laying up sheets of composite materials pre-impregnated with resin. In both cases the sheets are then subjected to a cure process.

Although the aforementioned manufacturing processes may produce high quality flowbodies, use of the processes may be limited by various factors. For example, machining flowbodies from metal may not be useful for forming large flowbodies, as such structures may be relatively labor intensive and/or expensive to produce. Additionally, forming flowbodies by hand laying of pre-impregnated sheets or by resin-transfer molding processes may involve expensive tooling and may be relatively labor-intensive, which can add to manufacturing costs. The attachment of bosses, door frames or other appendages to composite flowbodies may be relatively difficult, as contoured junction surfaces with large areas may need to be incorporated to prevent the attachments from debonding.

Accordingly, there is a need for a process for manufacturing flowbodies that may be used to form flowbodies including metal, composite or both. It is desirable for the process to be relatively inexpensive and simple to perform. Furthermore, other desirable features and characteristics of the inventive subject matter will become apparent from the subsequent detailed description of the inventive subject matter and the appended claims, taken in conjunction with the accompanying drawings and this background of the inventive subject matter.

### BRIEF SUMMARY

Methods of forming flowbodies and flowbodies are provided.

In an embodiment, by way of example only, a method includes providing a first sheet of a first material comprising a metal, providing a second sheet of a second material comprising a composite, attaching a portion of the first sheet to a first position on a preform, securing a portion of the second sheet to a second position on the preform, and winding the first sheet and the second sheet around the preform to form the first flowbody, the first flowbody including a laminate comprising alternating layers of the first sheet and the second sheet.

In another embodiment, by way of example only, a flowbody includes an acoustic structure and a laminate over the acoustic structure, the laminate including a plurality of layers including a first sheet of a first material and a second sheet of a second material, the first material comprising an aluminum metal and the second material comprising a composite.

### BRIEF DESCRIPTION OF THE DRAWINGS

The inventive subject matter will hereinafter be described in conjunction with the following drawing figures, wherein like numerals denote like elements, and

FIG. 1 is a radial cross section of a flowbody, according to an embodiment;

FIG. 2 is a radial cross section of a flowbody, according to another embodiment;

FIG. 3 is a radial cross section of a flowbody, according to still another embodiment;

FIG. 4 is an axial cross section of a flowbody including an attachment, according to an embodiment;

FIG. 5 is an axial cross section of a first flowbody and a second flowbody secured to the first flowbody, according to an embodiment;

FIG. 6 is an axial cross section of a first flowbody and a second flowbody secured to the first flowbody, according to another embodiment;

FIG. 7 is an axial cross section of a first flowbody and a second flowbody secured to the first flowbody, according to yet another embodiment;

FIG. 8 is a flow diagram of a method of manufacturing a flowbody, according to an embodiment;

FIG. 9 is a simplified schematic of a setup that may be employed for the method depicted in FIG. 8, according to an embodiment;

FIG. 10 is a simplified schematic of another setup that may be employed for the method depicted in FIG. 8, according to an embodiment; and

FIG. 11 is a simplified schematic of another step of the method depicted in FIG. 8, according to an embodiment

### DETAILED DESCRIPTION

The following detailed description is merely exemplary in nature and is not intended to limit the inventive subject matter or the application and uses of the inventive subject matter. Furthermore, there is no intention to be bound by any theory presented in the preceding background or the following detailed description.

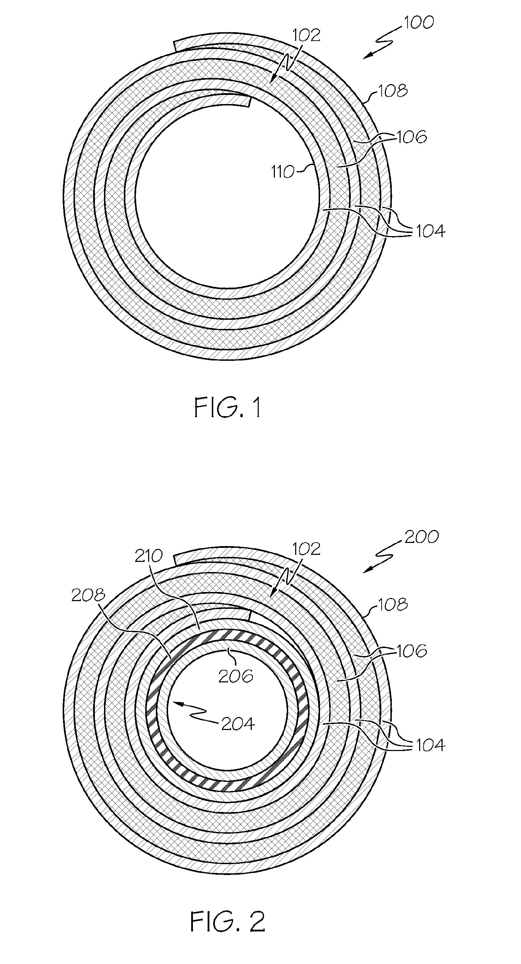

FIG. 1 is a radial cross section of a flowbody 100, according to an embodiment. The flowbody 100 may be a structure for use in an aircraft, watercraft, spacecraft, landcraft or any other type of vehicle that may be used to house various components of the vehicle or for providing a flow path for fluid, such as gases or liquids, through the vehicle. For example, the flowbody 100 may be a fan case for housing a fan, a bypass duct for directing air, and the like. Alternatively, the flowbody 100 may be incorporated as part of a section of a fuselage for an air vehicle. In accordance with another embodiment, the flowbody 100 may be used as an enclosure for storage, such as a container with end caps for storing materials in a hostile environment. According to yet another embodiment, the flowbody 100 may be used as a reinforcement structure. For example, a deteriorating cylindrical concrete support for a structure could be reinforced by wrapping with a hybrid laminate.

In these regards, the flowbody 100 may be generally axisymmetric, in an embodiment. In particular, the flowbody 100 may be cylindrical, in an embodiment, or conical, in another embodiment. Although the flowbody 100 in FIG. 1 is shown as having a circular radial cross section, the flowbody 100 may alternatively have a radial cross section having a different shape, such as ovular, elliptical, or polygonal. In other embodiments, the radial cross section shape may be any other shape typically employed for a vehicle flowbody.

The flowbody 100 may be relatively large and may have an outer diameter in a range of from about 3 meters (m) to about 8 m. In other embodiments, the flowbody 100 may be smaller, for example, having an outer diameter in a range of from about 0.1 m to about 0.3 m. According to still other embodiments, the outer diameter of the flowbody 100 may be larger or smaller. The flowbody 100 may be relatively thin-walled and may have a wall thickness in a range of from about 0.1 cm to about 1.0 cm, in an embodiment. In other embodiments, the flowbody 100 may have a wall thickness that is greater than or less than the aforementioned range.

In accordance with an embodiment, the flowbody 100 includes a laminate 102 of alternating layers of a first material and a second material to form a stack. As will be described further below, the alternating layers may be made from overlapping sheets 104, 106 of the first and second materials. The first and second sheets 104, 106 may be disposed over each other and mechanically fastened to each other, or alternatively, the sheets 104, 106 may have surfaces that are entirely or at least partially adhered to each other with an adhesive, so that each layer including the first sheet 104 is attached to an adjacent layer made up of the second sheet 106. The sheets 104, 106 may be oriented such that a radial cross section of the flowbody 100 includes a spiral shape that starts at an outer surface 108 of the flowbody 100 and ends at an inner surface 110 of the laminate 102. Alternatively each sheet may form a single circular (360°) path.

As mentioned briefly above, the sheets 104, 106 are made up of two materials. According to an embodiment, the two materials are different types of materials. For example, the first sheet 104 may include a first material that comprises a metal sheet, in an embodiment. The metal sheet may be a sheet of aluminum, titanium, or stainless steel. In other embodiments, the metal sheet may be made of a different metal. In accordance with another embodiment, the first sheet 104 may have a thickness in a range of from about 0.03 cm to about 0.130 cm, in an embodiment. In other embodiments, the first sheet 104 may have a thickness that is greater than or less than the aforementioned range. Although the first sheet 104 is shown as a single ply in FIG. 1, the first sheet 104 may be made up of more than one ply to obtain a particular desired thickness or properties, in other embodiments.

The second sheet 106 includes a second material that may comprise a composite.
In an embodiment, the composite may include fibers that have been woven or braided into a fabric. In another embodiment, the composite may include a fabric that comprises unidirectional fibers. In still another embodiment, the composite may include both woven and unidirectional fibers. The fibers may comprise composite materials that are conventionally employed in the construction of composite structures for use on vehicles, such as aircraft. In an embodiment, the fibers may be glass fibers, carbon fibers, basalt fibers, and the like. In an embodiment, an S2 glass fiber is employed. In any case, a matrix resin may be included on the composite for adhering adjacent sheets (e.g., adjacent sheets of either metal or composite). In an embodiment, the matrix resin may be an epoxy, a bismaleimide, or another adhesive material that is suitable for adhering adjacent layers together.

The second sheet 106 may have a thickness in a range of from about 0.02 cm to about 0.05 cm, in an embodiment. In other embodiments, the second sheet 106 may have a thickness that is greater than or less than the aforementioned range. The particular thickness of the second sheet 106 may depend on a thickness of the first sheet 104 (i.e., metal sheet) and particular limitations that may be imposed on the flowbody 100. According to one embodiment, a lighter weight flowbody 100 may be desired; hence, because the composite material may weigh less than the metal material, a thicker second sheet 106 (i.e., composite material) relative to the first sheet 104 may be employed. In other embodiments, less composite material may be desired as compared to metal material, and thus, the second sheet 106 may be thinner than the first sheet 104.

In an embodiment, the second sheet 106 may be comprised of a composite material including one or more layers of unidirectional fibers. The fibers may be positioned at angles of 0° and 90° relative to a longitudinal axis of a wound first sheet 104 of metal. In other embodiments, the fibers may be positioned at about ±45° angles relative to the longitudinal axis. For example, the fibers may be oriented at ±45° to improve shear or off-axis properties of the second sheet 106 and to allow for thermal expansion of the second sheet 106 relative to the first sheet 104.

Although the flowbody 100 is shown in FIG. 1 as including the first sheet 104 as an innermost layer thereby forming the inner surface 110 of the laminate, the second sheet 106 may form the innermost layer in other embodiments. Similarly, although the first sheet 104 is also shown as making up an outermost layer to thereby form the outer surface 108 of the laminate, the second sheet 106 may form the outermost layer, according to other embodiment. Moreover, although the first sheet 104 and the second sheet 106 are described above as including a metal material and a composite material, respectively, the sheets 104, 106 may have other configurations in other embodiments. For example, in some embodiments, the first sheet 104 may be made of a first type of composite material instead of metal.

In some embodiments, structures for performing particular desired functions may be included as part of the flowbody 100. FIG. 2 is a radial cross section of a flowbody 200, according to another embodiment. Here, the flowbody 200 may be a muffler, or other component through which noise may travel. In such a case and in accordance with an embodiment, the flowbody 200 may include a spiral wound laminate 202 that is formed substantially similarly to laminate 102 of flowbody 100 of FIG. 1, except the flowbody 200 may further include an acoustic structure 204 for damping noise that may travel through the flowbody 200. According to an embodiment, the acoustic structure 204 may be disposed radially inwardly relative to the laminate 102 and may include a perforate layer 206, bulk absorption or honeycomb layer 208, and a backing structure 210. The perforate layer 206 is configured to provide acoustic transparency to any incident sound. In an embodiment, acoustic transparency is provided by including a percent of open area ("POA") in the perforate layer 206. For example, the perforate layer 206 may be a sheet of material that is perforated to include a POA value that is greater than 30%. In another embodiment, the perforate layer 206 may be a screen having a POA value that is greater than 30%. Suitable materials from which the perforate layer 206 may be made include, but are not limited to aluminum, stainless steel, and bismaleimide composite. The perforate layer 206 may have a thickness in a range from about 0.02 cm to about 0.08 cm. However, the particular thickness may be greater or less than the aforementioned range, depending on the particular material used.

The bulk absorption layer 208 is adapted to receive the incident sound traveling through the perforate layer 206 and to damp the sound. Suitable materials that may be employed as part of the bulk absorption layer 208 include, but are not limited to foamable material, material having honeycomb cavities therein, honeycomb material filled at least partially with epoxy for structural enhancement, or any one of numerous other type of acoustic damping material. The bulk absorption layer 208 may have a thickness in a range from about 0.5 cm to about 3.0 cm. However, the particular thickness may be greater or less than the aforementioned range, depending on the particular magnitude of the acoustic treatment.

The backing structure 210 may be adapted to provide structural integrity to the bulk absorption layer 208 and may be an imperforate panel. In an embodiment, the backing structure 210 may be constructed of any one of numerous types of non-porous materials such as, for example, aluminum, epoxy, or bismaleimide (BMI). According to an embodiment, the backing structure 210 may be bonded directly to the bulk absorption layer 208. In other embodiments, the backing structure 210 and the perforate layer 206 may be disposed such that the bulk absorption layer 208 is maintained therebetween. The backing structure 210 may have a thickness in a range from about 0.05 cm to about 0.4 cm. However, the particular thickness may be greater or less than the aforementioned range, depending on the particular material used.

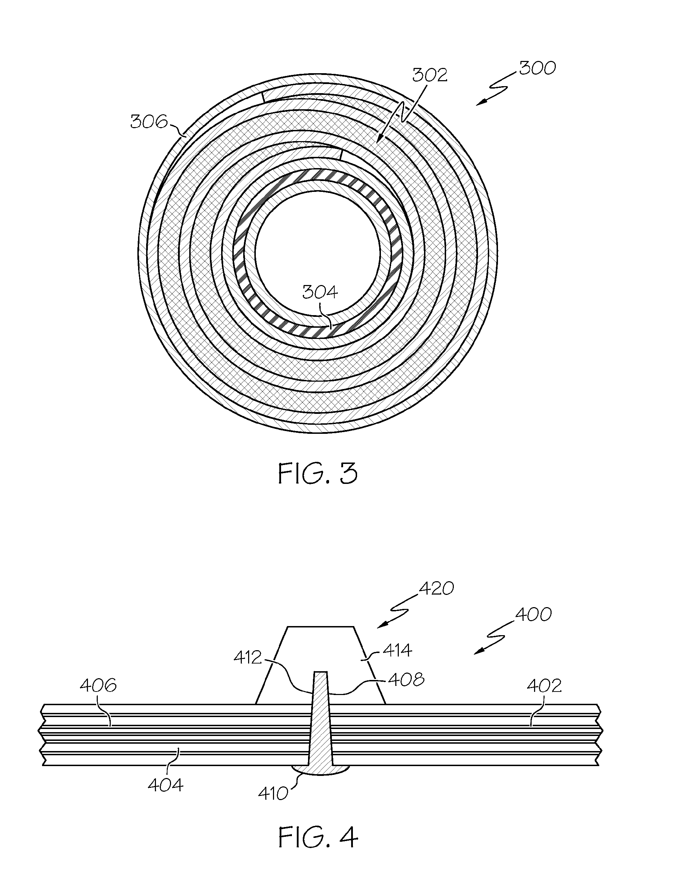

FIG. 3 is a radial cross section of a flowbody 300, according to still another embodiment. The flowbody 300 may be configured similar to flowbody 200 in FIG. 2 and may include a laminate 302 and an acoustic structure 304, but may also include an outer layer 306. The outer layer 306 may be a protective material configured to enhance the useful life of the flowbody 300. In this regard, the outer layer 306 may comprise material suitable for resisting degradation when exposed to certain environments. For example, the flowbody 300 may be subjected to high temperatures (e.g., greater than about 200 °C) and thus, may be made of material that may withstand exposure to such temperatures. Suitable materials include, but are not limited to PMR-15, a high temperature resin developed by NASA which is available through HyComp of Cleveland, OH. In another example, the flowbody 300 may be subjected to particle impact; thus, to provide wear resistance, the outer layer 306 may include a wear-resistant material. Suitable abrasion resistant materials include, but are not limited to polyurethane. In still another example, the flowbody 300 may be configured to serve as a ballistic shield to components encased within, and the outer layer 306 may be made of polyaramid fiber, such as Kevlar® available through E.I. DuPont de Nemours of Delaware. Alternatively the outer layer 306 may be a ballistic material to contain projectiles originating from within the structure; for example a broken fan blade. Depending on the particular purpose for which the outer layer 306 is included, the outer layer 306 may have a thickness in a range of from about 0.3 cm to about 3.0 cm. In other embodiments, the outer layer 306 may be thicker or thinner and may include a deposited layer of material or a slip-fit sleeve of material. In still other embodiments of flowbody 300, the acoustic structure 304 may be omitted.

Flowbodies that are configured substantially similarly to flowbody 100 (FIG. 1), flowbody 200 (FIG. 2), and/or flowbody 300 (FIG. 3) may include various attachments. In accordance with an embodiment, FIG. 4 is an axial cross section of a flowbody 400 including an attachment 420. The flowbody 400 may include at least a laminate 402 of alternating sheets 404, 406 of material and a fastener 408 that is inserted through the laminate 402. The fastener 408 may be a bolt, screw, rivet or another fastening device and may include a head 410, which may be raised, flush, or recessed, and a threaded end 412, in an embodiment. In accordance with an embodiment, the head 410 may be a flat head and configured to be advanced by rotation to thereby allow the threaded end 412 to be received by a boss 414. One or both of the fastener 408 and the boss 414 may comprise a metal or composite material, in an embodiment. Although the boss 414 is shown as having beveled sides, the sides may be oriented perpendicular to the flowbody 400 in other embodiments. Moreover, although the boss 414 appears to have sharp edges, the edges may alternatively be smooth. In other embodiments, the attachment may be a handle, a door frame, a hinge or a grounding cable.

According to another embodiment, two flowbodies may be secured to each other.

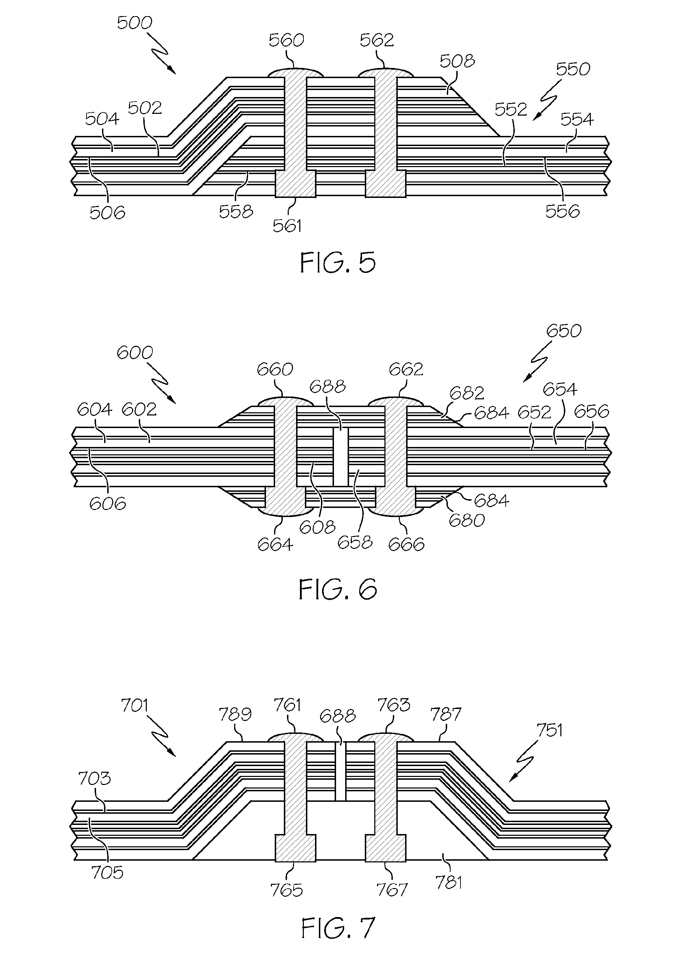

FIG. 5 is an axial cross section of a first flowbody 500 and a second flowbody 550 secured to the first flowbody 500, according to an embodiment. The flowbodies 500, 550 may be configured substantially similarly to flowbody 100 (FIG. 1), flowbody 200 (FIG. 2), and/or flowbody 300 (FIG. 3). In an embodiment, the first and the second flowbodies 500, 550 are substantially identical in configuration. In accordance with another embodiment, the first and the second flowbodies 500, 550 are not identical in configuration. For example, the first flowbody 500 may not include materials that are identical to those included in the second flowbody 550. In any case, in a preferred embodiment, the flowbodies 500, 550 both include laminates 502, 552. According to an embodiment, each laminate 502, 552 has alternating sheets 504, 506, 554, 556 of materials. In one embodiment, an end 508 of the first flowbody 500 has an inner diameter that is larger than an outer diameter of an end 558 of the second flowbody 550. In this way, the end 558 having the smaller diameter is inserted into the larger end 508. To secure the flowbodies 500, 550 to each other, one or more fasteners 560, 562 may be inserted therethrough. The fasteners 560, 562 may be screws, bolts, rivets, or other fastening devices. Although two fasteners 560, 562 are shown in FIG. 5, fewer or more may alternatively be included. For example, a suitable number of fasteners may be included at various locations around the circumference of the flowbodies 500, 550.

FIG. 6 is an axial cross section of a first flowbody 600 and a second flowbody 650 secured to the first flowbody 600, according to another embodiment. The flowbodies 600, 650 may be configured substantially similarly to flowbody 100 (FIG. 1), flowbody 200 (FIG. 2), and/or flowbody 300 (FIG. 3), and each of flowbody 600, 650 may either be substantially identical or different in structure. For example, the first flowbody 600 may or may not include materials that are identical to those included in the second flowbody 650. In any case, in a preferred embodiment, the flowbodies 600, 650 both include laminates 602, 652. According to an embodiment, each laminate 602, 652 includes alternating sheets 604, 606, 654, 656 of materials, and each flowbody 600, 650 includes an end 608, 658. Both of the ends 608, 658 may be substantially equal to each other in diameter, in an embodiment.

To secure the ends 608, 658 to each other, an inner ring 680 and an outer ring 682 are included. According to an embodiment, the inner ring 680 is disposed concentric to the outer ring 682 to form a gap within which the end of the first flowbody 600 and the end 658 of the second flowbody 650 are disposed. Each of the rings 680, 682 may have beveled sides 684, 686, in an embodiment; however, in other embodiments, the sides 684, 686 may not be beveled. The inner ring 680 and the outer ring 682 may be made of the same material as parts 600 or 650. Alternatively suitable metallic materials include, but are not limited to aluminum, titanium, and stainless steel. The rings 680, 682 may be made of substantially similar materials, in an embodiment.

According to an embodiment, a spacer 688 may be disposed between the inner and outer rings 680, 682 between the end 608 of the first flowbody 600 and the end 658 of the second flowbody 650. The spacer 688 may be compressible to provide for space for pre-tensioning or thermally-induced length changes of the flowbodies 600, 650 and to cushion axial shock. In this regard, the spacer 688 may comprise a high temperature elastomer. To maintain the components together, a first fastener 660 may be inserted through the outer ring 682, the first flowbody 600, and the inner ring 680. The first fastener 660 may be secured in an anchor 664 embedded in the inner ring 680. The fastener 660 may be secured by screwing it into threads of the anchor 664. A second fastener 662 may be inserted through the outer ring 682, the second flowbody 650, and the inner ring 680 and be similarly secured. The fasteners 660, 662 may be screws, bolts, rivets, or other fastening devices. Although two fasteners 660, 662 are shown in FIG. 5, more may alternatively be included around the circumference of the flowbody.

FIG. 7 is an axial cross section of a first flowbody 701 and a second flowbody 751 secured to the first flowbody 701, according to yet another embodiment. Here, the two flowbodies 701 and 751 can be attached using similar materials and method as used in FIG 6. Inner surfaces of each flowbody 701, 751 are smoothed via a beveled block 781, having anchors 765 and 767 that receive fasteners 761 and 763 inserted through the flowbodies 701 and 751, according to an embodiment. In an alternative embodiment, a second block (not shown) may be positioned on outer surfaces 787, 789 of each flowbody 701, 751 through which the fasteners 761 and 763 are inserted.

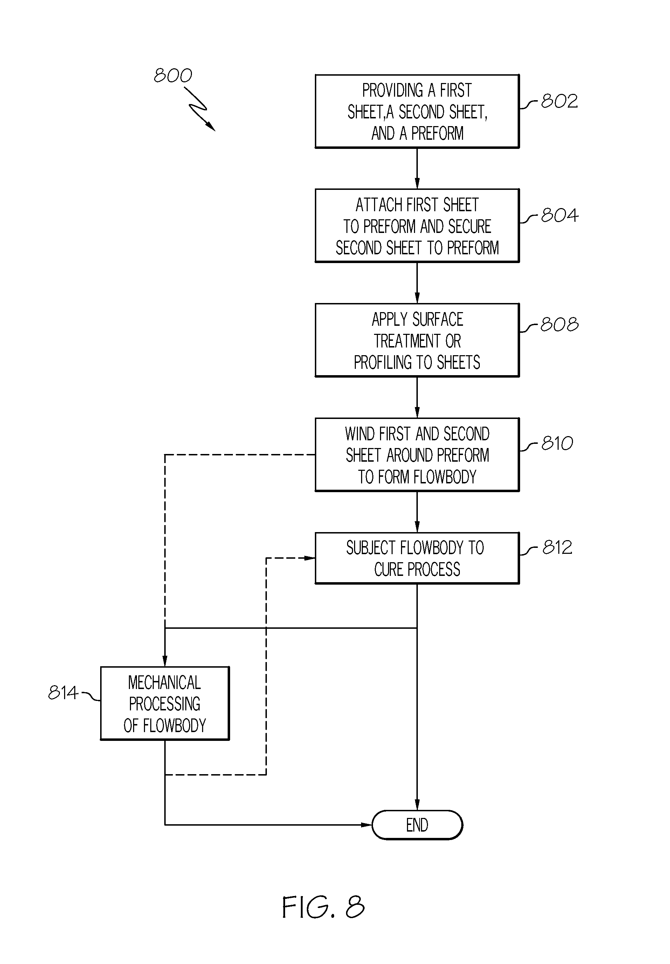

To form the flowbodies 100, 200, 300, 400, 500, 600, and 700 described above, a method 800 may be employed. FIG. 8 is a flow diagram of the method 800 of manufacturing a flowbody, according to an embodiment. According to an embodiment, a first sheet of a first material, a second sheet of a second material, and/or a preform are provided, step 802. In an embodiment, the first material of the first sheet and the second material of the second sheet are substantially identical to the materials described above as related to the alternating layers comprising the laminates 102, 202, 302, 402, 502, 552, 602, 662. In a particular embodiment, the first material may be a metal and the second material may be a composite; however, in other embodiments, the first material may be the composite and the second material may be the metal.

In any case, the metal used for either the first or second material may be supplied as a continuous sheet. For example, the metal may be supplied as a foil. In another embodiment, the metal may be a thin metal sheet that is wound as a roll. The roll may be disposed around a spool, or another cylindrically-shaped or tubular support member. In an embodiment, the sheet may have sufficient length to apply only one layer on the roll. In embodiments in which a desired thickness of the first sheet is relatively thick, two or more metal sheets bonded with adhesive may overlay each other and may be provided as a multiply stack of sheets. Alternatively, the stack of adherent sheets may be wound up and supplied as a roll of metal material.

In some embodiments, the metal may have a smooth surface across its entirety. However, in other embodiments, in order to enhance adhesion of the sheets to the adhesive, the metal sheet may be provided with a plurality of formations formed therein. The formations may be openings that are configured such that an adhesive, such as the matrix resin used in the composite or another adhesive material, may bleed therethrough. According to an embodiment, the openings are relatively small and may have diameters in a range of from about 0.2 mm to about 1 mm. The openings may be substantially uniformly spaced across an entirety of the metal sheet, in an embodiment. In another embodiment, the openings may be randomly spaced. In still other embodiments, the openings may be located around an outer periphery of the metal sheet or may be located around a center portion of the metal sheet. In still yet other embodiments, the openings may be formed at desired locations on the metal sheet that may be adhered to other materials. The openings may be larger or smaller than the aforementioned range and/or may be formed in other portions of the metal sheet, as long as the metal sheet maintains structural properties including fatigue for which it is intended to provide to the flowbody.

In another embodiment, the formations may be projections and/or indentations that result from roughening of the surface of the metal sheet. For example, a rough surface may be rubbed or pressed against the metal sheet to form the projections or indentations. In some cases, the projections and/or indentations may be confined to one surface of the metal sheet. In an embodiment, the projections may be relatively small and may have a largest diameter in a range of from about 0.02 mm to about 0.1 mm. The projections or indentations may be substantially uniformly spaced across an entirety of the metal sheet, in an embodiment. In another embodiment, the projections or indentations may be randomly spaced. In still other embodiments, the projections or indentations may be formed around an outer periphery of the metal sheet or may be formed around a center portion of the metal sheet. In still yet other embodiments, the projections may be formed at desired locations on the metal sheet that may be adhered to other materials in subsequent steps of method 800. In other embodiments, the projections and/or indentations may be larger or smaller than the aforementioned range and/or may be formed in other portions of the metal sheet, as long as the metal sheet maintains structural properties for which it is intended to provide to the flowbody.

The composite used for the first or the second material may be a fabric. In an embodiment, the fabric may be made up of fibers, such as the glass, carbon, basalt, or other fibers discussed above. The fibers may be woven or braided into the fabric, and the fiber may be oriented in a desired manner. For example, the fibers may be unidirectional. According to an embodiment, the fibers may be stretched broken fibers. In other embodiments, the fibers may not form a particular pattern. The fabric may be supplied as a pre-impregnated material including a matrix resin which may be formulated to adhere the sheets to each other, which will be discussed in more detail below. In other embodiments, the matrix resin may be epoxy, bismaleimide or other adhesive. In another embodiment, the fabric may be obtained, and the matrix resin may be applied to the fabric to form the pre-impregnated material.

As mentioned briefly above, a preform may also be provided. The preform is positioned over a mandrel which is the shape of the interior surface of the duct. In an embodiment, the preform is the inner surface layer of a desired resultant flowbody. In some embodiments, the preform may be axisymmetric, such as a cylinder or a cone. In other embodiments, the preform may be generally tubular and/or may generally have a shape that forms a flow path. The preform may be made of the first or the second material, in accordance with an embodiment. For example, the first or the second material may be shaped on the mandrel to form the preform. In another embodiment, the preform may be made of material having properties that are desired for an interior of the flowbody, for example, the preform may be a smooth metal cylinder. According to another example, the desired resultant flowbody may be designed to damp noise, and the preform may be a structure capable of damping noise. In one embodiment, the preform may include an acoustic structure, such as acoustic structure 204 (FIG. 2) described above. For example, the preform may include providing a first layer of a perforate material, an interior layer of a bulk absorption material over the first layer of the perforate material, and a layer of an imperforate material over the interior layer.

Next, a portion of the first sheet of the first material is attached to the preform, and a portion of the second sheet of the second material is secured to the preform, step 804. In an embodiment, the portion of the first sheet may be attached to a first location and the portion of the second sheet may be attached to a second, different location. In another embodiment, the two sheets may be attached to substantially the same location on the preform. For example, the first sheet may be attached to the preform and the second sheet may be secured to the first sheet, effectively overlapping the first sheet, to thereby attach to the preform via the first sheet. In an embodiment, the two sheets may be oriented relative to each other in a specified manner. The particular orientation of the fibers in the composite may be selected based on a desired manner in which reinforcement may be provided to the flowbody. For example, a circumferential orientation of the fibers may be selected to enhance an ability of the flowbody to resist hoop stress. According to an embodiment in which the first sheet includes the composite and the second sheet includes the metal, the composite sheets may be oriented on the preform at a 90° angle (e.g., perpendicular) relative to an axis of rotation thereof to resist axial deformation. In another embodiment, the first sheet and the second sheets are wound around the preform at an angle that is not perpendicular to the axis of rotation. In another embodiment, the first sheet including the composite may be oriented such that fibers thereof may be disposed at a 45° angle relative to the centerline, which may at least partially accommodate any mismatch in thermal expansion between two different materials, such as the metal and composite.

To attach at least the first sheet of material to the preform, adhesive may be applied between the first sheet and the outer surface of the preform in an embodiment. In another embodiment, the first sheet may be mechanically coupled to the preform via rivets. In embodiments in which the second sheet of material is also attached to the preform or where the second sheet of material is attached thereto via the first sheet, attachment may be performed in a manner similar to how the first sheet is attached to the preform. Alternatively the tackiness of the second sheet may be sufficient to secure the sheet to the perform.

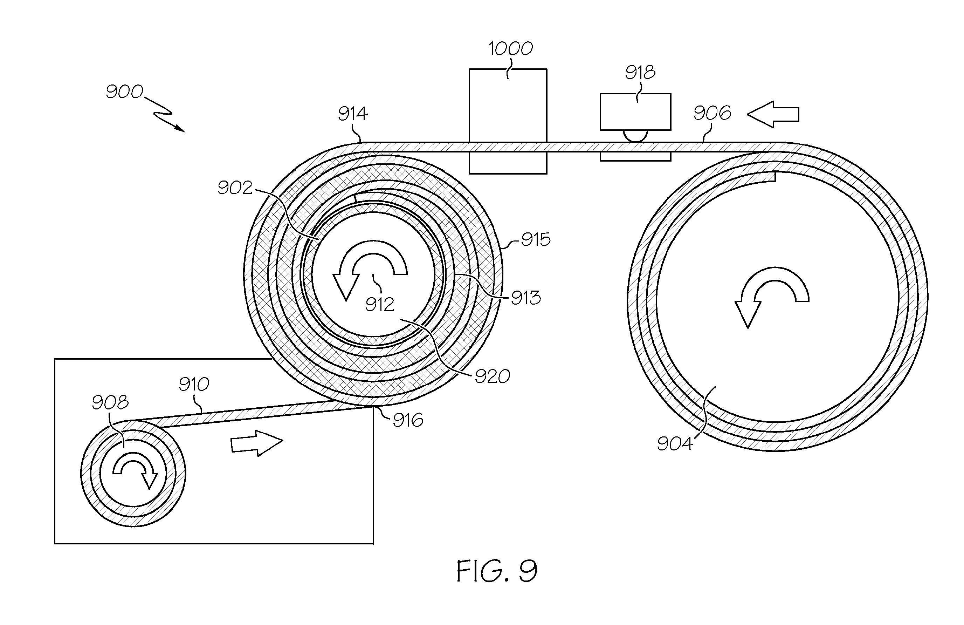

An example of a setup 900 that may be used for several steps of method 800 is provided in FIG. 9, according to an embodiment. The setup 900 includes a preform 902, a rotating mandrel 920, a first roll 904 of a first material 906, and a second roll 908 of a second material 910. The preform 902 is positioned on a mandrel 920, which is configured to rotate about an axis which extends through a center 912. In accordance with an embodiment, the material 913 built up on the preform 902 has an outer surface 915 on which a first position 914 for attaching the first material 906 is located and on which a second position 916 for attaching the second material 910 is located.

According to an embodiment, the first roll 904 and the second roll 908 are disposed on either side of the mandrel 920. In other embodiments, both of the rolls 904, 908 may be disposed on the same side of the mandrel 920. The first material 906 extends from the first roll 904 to attach to the built-up surface 915 at location 914, as described above. In an embodiment in which the first material 906 is a metal and the metal is a substantially smooth, flat sheet, surface treatment equipment 918 may be included between the first mandrel 920 and the preform 902,. In accordance with an embodiment, the surface treatment equipment 918 may be adapted to roughen a surface of the first material 906 by forming projections and/or indentations and/or openings in the first material 906 to enhance adhesion of the first material 906 to the second material 910. The second material 910 extends from the second roll 908 to attach to the built-up surface 915 at location 916, as described above. The directions of rotation of the rolls and the detachment and reattachment points 914 and 916 of the materials to the rolls are all arbitrary and may changed in a manner consistent with physical operations of the system.

In another embodiment, a long structure, such as the skin on the fuselage for an airplane, may be desired. In such a case, setup 900 may be unsuitable for forming the structure, due to the size, shape, and/or width of an available material. For example, aluminum may not be available in sheets of sufficient width and winding such sheets having widths suitable for forming an airplane fuselage or other long structures may be relatively difficult. In this regard, the long structure may be formed by a spiral winding of sheets along the length ot the mandrel. Two or more long sheets may be used, where each sheet may have one or both ends cut at an angle to align with the edge of the preform at the start or end of the winding process. For example, one or both ends may be cut to an angle of 45°. In other embodiments, the angle may be greater or less than 45°. The long sheets may be supplied from rolls, and both bias cut ends are attached to an outer surface of a long mandrel. A rotational axis of a first supply roll is positioned at an angle to relative to the axis of rotation of the long mandrel. The angle of the rotational axis of the first supply roll may be about 45° in an embodiment. In other embodiments, the angle may be greater or less. A rotational axis of a second supply roll for the second sheet may be positioned at the same or different angle from the first roll relative to the axis of rotation of the long mandrel. The first and second sheets are applied as spiral wraps along the entire length of the mandrel. According to an embodiment, each sheet may be supplied alternately and offset relative to each other to avoid overlapping joints. The two feed rolls and the mandrel translate relative to each other at a fixed angle to give a uniform wrap. Alternatively the first and second sheets may be stacked one on top of the other so than only one feed roll is used. Each layer of the spiral wrap would comprise a length of sheet sufficient to cover the mandrel surface of the flowbody.

Surface treatment or profiling may be applied to the first and/or second sheets, step 808. According to an embodiment, surface treatment may include forming projections or indentations in the first sheet for enhancing adhesion between the first sheet and the second sheet. In an embodiment in which surface treatment equipment 918 is included, a portion of the first material 906 may undergo roughening as it is pulled through the equipment 918 and before it is laid over the preform 902. For example, the surface treatment equipment 918 may roughen selected portions of the first material 906, such as those which may be cut for the formation of large openings in later steps of method 800. Thus, the roughened portions may prevent or decrease delamination of the layers in those areas of the flowbody. In any case, the preform 902 completes at least one full rotation, and depending on a preferred thickness of the flowbody, may complete more than one full rotation. As a result, the flowbody is formed including a laminate comprising alternating layers of the first material (formed from the first sheet disposed on the first roll) and the second material (formed from the second sheet disposed on the second roll). Although in this particular embodiment, the first material 906 is depicted as a metal material and the second material 910 is depicted as the composite, other embodiments may include the metal material as the second material 910 and the composite as the first material 906.

According to another embodiment, minor local changes in diameter along the periphery of the flowbody are made by contouring one or both the first and second materials. For example, contouring of a composite fabric may be achieved by employing a bias ply (± 45°) weave or a braid having bias angles ranging from about ±30° to ±60°. In an embodiment, length and/or width dimensions of the composite fabrics can be adjusted in desired portions thereof, as these materials can be narrowed as they are stretched in length or widened as they are compressed in length.

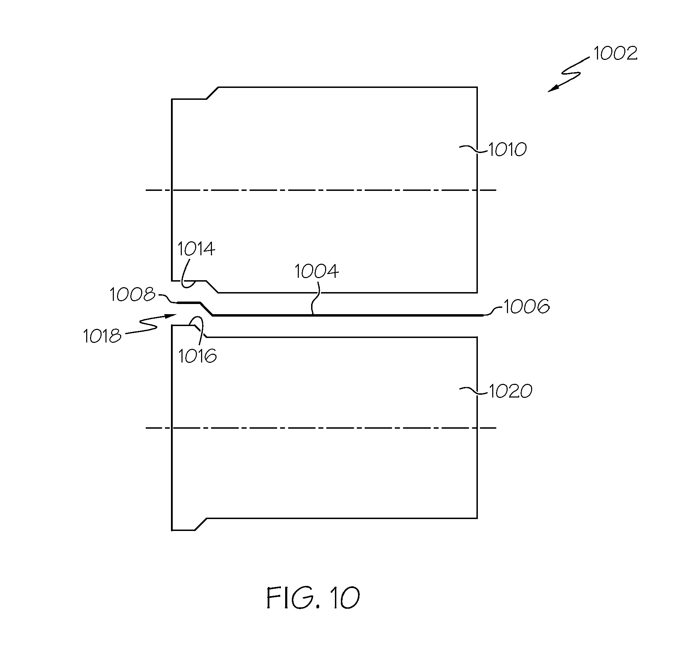

In another embodiment in which the material is a metal, the metal can be deformed between rollers. FIG. 10 is a simplified schematic of shaping device 1002 that may be employed as part of step 808 for the method 800 depicted in FIG. 8. The shaping device 1002 is shown in an exploded view, for clarity. In accordance with an embodiment, the shaping device 1002 may include rollers 1010, 1020, each having a beveled surface 1014, 1016 to deform a sheet 1004 from an entirely flat configuration to a configuration with a flat section 1006 and a raised edge 1008 on a border. The sheet 1004 may be used in constructing flowbody 500 (FIG. 500) or flowbody 700 (FIG. 7). The shaping device 1002 may be positioned at location 1000 in FIG. 9. In an embodiment, an increase in radius of 0.635 cm in a 1.22 m diameter cylinder may be desired, resulting in an increase of overall diameter (increase in length) of about 1%. According to an embodiment in which the material is a ductile metal, the 1% increase in length and width can be accomplished by compressing the sheet 1004 in a gap 1018 between the rollers 1010, 1020, and by causing slight buckling in the sheet 1004 disposed between the beveled surfaces 1014, 1016 of the rolls 1010, 1020. A portion of the deformation in the raised edge 1008 of the sheet 1004 can be temporarily accommodated by a reversible elastic deformation in the edge region 1008 of the sheet 1004. After contouring, the material is applied to the roll 900. In such case, the mandrel 920 and the preform 902 may have a profile that matches that of the material positioned on the roll 914. By positioning the raised edge 908 in a section of the material having a larger diameter than adjacent sections, substantially all of the effects of buckling and elastic deformation in the raised edge 1008 may be removed from the material.

With reference to FIGs. 8 and 9, the first sheet and the second sheet are wound around the preform to form the flowbody, step 810. In an embodiment, the flowbody comprises laminate comprising alternating layers of a first sheet including the first material and a second sheet including the second material. In this regard, both the first and second materials 906, 910 are pulled from their respective rolls 904, 908 as the mandrel 920 rotates. In this regard, a portion of the first sheet of material unrolls from the first roll 904 and a portion of the second sheet of material unrolls from the second roll 908 to cover the outer surface of the preform. Step 810 continues until a desired thickness of the flowbody is achieved. In some embodiments, matrix resin is applied to the sheets as the first and second sheets of materials are unrolled. For example, matrix resin may be bled through at least a portion of the openings, if any, in the first sheet for adhering the first and the second sheets to each other.

In one embodiment of the method 800 after step 810, the flowbody is subjected to a cure process, step 812. In an embodiment, step 812 may take place in a cure chamber, such as an oven, an autoclave or a vacuum furnace. The flowbody may be disposed in the cure chamber, which is then closed and heated through a temperature cycle prescribed for the matrix resin. The preform 902 and the outer metal surface of the flow body may serve as mold surfaces in maintaining pressure in the walls of the flowbody and the flowbody shape during cure. After step 812, the method 800 may end, in an embodiment.

In another embodiment, after step 812 is performed, mechanical processing may be performed on the flowbody, step 814. For example, an outer layer may be applied to the outer surface of the flowbody. In an example, the outer layer is constructed from material similar to those used for outer layer 306 in FIG. 3. Depending on the particular material, the outer layer may be deposited onto the flowbody outer surface, in an embodiment. In another embodiment, a sleeve made of the outer layer material may be slip fit around the flowbody. For example, the sleeve may be heated and/or the flowbody cooled and the flowbody may be inserted into the sleeve.

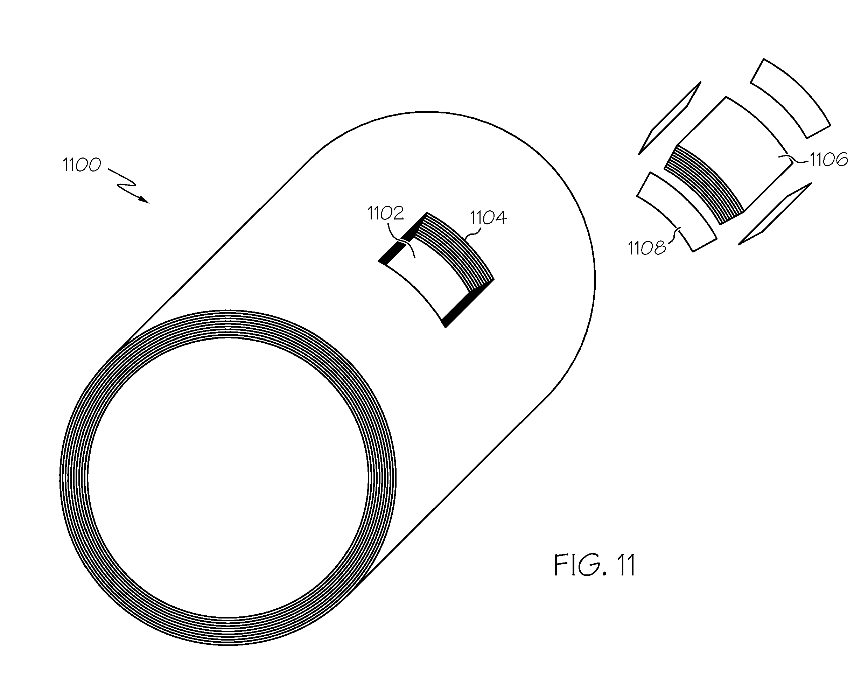

According to an embodiment of step 814, the flowbody may be processed to include openings and doors coupled thereto. In this regard, an opening may be machined into the flowbody via any one of numerous cutting processes, such as by water jet ablation, or sawing, and the like. FIG. 11 is a simplified schematic of such a flowbody 1100 during step 814, according to an embodiment. The flowbody 1100 includes an opening 1102, which then may be lined with trim 1104, or another smoothing or sealing feature to thereby form a door frame. As a result of the cutting process, a portion 1106 of the flowbody may be removed. The removed portion 1106 may be configured into a desired shape and/or dimension by another machining process, and the edges of the removed portion 1106 may be covered with trim 1108 that corresponds to the doorframe (1104) to form a door. In such case, the removed portion 1106 may be machined into a shape having substantially the same shape as the opening 1102 in the flowbody 1100, but may have dimensions slightly smaller than the opening 1102 so that the opening 1102 can accommodate the trim 1104 of the doorframe, the trim 1108 of the door, and the resultant door (e.g., removed portion 1006).

In yet other embodiments of step 814, one or more attachments may be coupled to the flowbody. For example, to obtain a configuration similar to flowbody 300, a fastener may be inserted through a hole drilled in the flowbody, where the fastener includes a head and a threaded end. In an embodiment, an opening may be formed through the flowbody 300 that accommodates a body of the fastener. The fastener is inserted until a surface of its head lays flush against a surface of the flowbody. A boss including threading thereon is then mated to the threaded end of the fastener to thereby retain the fastener against the flowbody. In other embodiments, an attachment surface of another component, such as a door latch, hinge, grounding step or a mount for a control unit, may be disposed between the boss and the surface of the flowbody to couple the component to the flowbody.

In still other embodiments of step 814, the flowbody (referred to as a "first flowbody" for clarity) may be further processed by being coupled to a second flowbody. For example, the second flowbody may be formed substantially identically to the first flowbody, in an embodiment. In other embodiments, the second flowbody may be formed and/or configured differently from the first flowbody. According to an embodiment in which the flowbodies are attached in a manner similar to flowbodies 500 and 550 in FIG. 5, an end of the first flowbody 500 is formed having an inner diameter that is larger than an outer diameter of an end of the second flowbody 550. The end of the first flowbody is inserted into the end of the first flowbody 500. A fastener is inserted through the first flowbody and the second flowbody to secure the two together.

According to yet another embodiment of step 814, the first flowbody is attached to a second flowbody in a manner similar to flowbodies 600, 650, 701, and 751 in FIGs. 6 and 7. For example, an inner ring 681 and optionally an outer ring at location 687 and 689 are provided. In an embodiment, an end of the first flowbody is inserted in a space formed between the inner and outer rings as shown in FIG. 6. According to an embodiment, the inner ring is disposed in an interior portion of the end of the first flowbody and extending axially away from the first flowbody, while the outer ring is disposed around an outer surface of the end and extending axially away from the first flowbody. The spacer 688 may be inserted into the space between the inner and outer rings adjacent to the end of the first flowbody to be disposed around a portion of the inner ring. An end of the second flowbody is then inserted into the space between the inner and outer rings and is placed adjacent to the spacer. Next, a first fastener is inserted through the inner ring, the first flowbody, and the outer ring to secure the inner ring, the first flowbody, and the outer ring to each other. A second fastener is inserted through the inner ring, the second flowbody, and the outer ring to secure the inner ring, the second flowbody, and the outer ring to each other. In an alternative embodiment shown in FIG. 7, a single inner ring is used to secure the two flowbodies with a smooth interior surface. In another alternative embodiment, a single outer ring may be used to form a smooth other surface. Alternatively two rings may be on the inner and outer surfaces of the joint area of FIG. 7.

In an alternate embodiment of method 800, step 814 may be performed before step 812. For example, the flowbody may be mechanically configured and then subsequently subjected to a cure process.

By forming each flowbody by the methods described above, manufacturing is less expensive and simpler than conventional processes for forming flowbodies. In particular, the above-described methods allow the flowbodies to be more easily customized to include attachments, doors, and fittings. Additionally, because the flowbodies include a laminate of alternating layers of materials (e.g., metal and composite), inexpensive fasteners, such as flat head screws, may be inserted through the laminate to couple the attachments to the flowbodies, which may further decrease costs.

While at least one exemplary embodiment has been presented in the foregoing detailed description of the inventive subject matter, it should be appreciated that a vast number of variations exist. It should also be appreciated that the exemplary embodiment or exemplary embodiments are only examples, and are not intended to limit the scope, applicability, or configuration of the inventive subject matter in any way. Rather, the foregoing detailed description will provide those skilled in the art with a convenient road map for implementing an exemplary embodiment of the inventive subject matter. It being understood that various changes may be made in the function and arrangement of elements described in an exemplary embodiment without departing from the scope of the inventive subject matter as set forth in the appended claims.

## Claims

1. A method of forming a first flowbody (100, 200, 300, 400, 500, 600, 701), the method comprising the steps of:
providing (802) a first sheet (104, 404, 504, 604) of a first material comprising a metal;
providing (802) a second sheet (106, 406, 506, 606) of a second material comprising a composite;
attaching (804) a portion of the first sheet (104, 404, 504, 604) to a first position on a preform (902);
securing (804) a portion of the second sheet (106, 406, 506, 606) to a second position on the preform (902); and
winding (810) the first sheet (104, 404, 504, 604) and the second sheet (106, 406, 506, 606) around the preform (902) to form the first flowbody (100, 200, 300, 400, 500, 600, 701), the first flowbody (100, 200, 300, 400, 500, 600, 701) including a laminate (102, 202, 302, 402, 502, 552, 602, 652) comprising alternating layers of the first sheet (104, 404, 504, 604) and the second sheet (106, 406, 506, 606).

2. The method of claim 1, wherein the step of providing (802) the second sheet (106, 406, 506, 606) comprises providing the composite by including a fabric with a matrix resin impregnated therein.

3. The method of claim 1, wherein the composite includes woven fibers pre-impregnated with the matrix resin.

4. The method of claim 1, wherein the second sheet (106, 406, 506, 606) comprises unidirectional fibers pre-impregnated with a matrix resin.

5. The method of claim 1, wherein the step of providing the first sheet (104, 404, 504, 604) comprises an aluminum metal sheet.

6. The method of claim 1, further comprising forming (808) projections or indentations in the first sheet (104, 404, 504, 604) for enhancing adhesion between the first sheet (104, 404, 504, 604) and the second sheet (106, 406, 506, 606).

7. The method of claim 1, wherein:
the step of providing (802) the first sheet (104, 404, 504, 604) comprises forming openings in the first sheet (104, 404, 504, 604);
the step of providing (802) the second sheet (106, 406, 506, 606) comprises providing a fabric pre-impregnated with a matrix resin; and
the step of winding (810) comprises bleeding matrix resin through at least a portion of the openings in the first sheet (104, 404, 504, 604) for adhering the first and the second sheets to each other.

8. The method of claim 1, further comprising the step of forming a layer on a surface of the first flowbody (100, 200, 300, 400, 500, 600, 701), the layer comprising a wear resistant material.

9. The method of claim 1, further comprising the step of changing (808) a diameter of a portion of the first sheet (104, 404, 504, 604) and the second sheet (106, 406, 506, 606) by deforming the first sheet (104, 404, 504, 604) and the second sheet (106, 406, 506, 606).

10. The method of claim 1 wherein the step of winding (810) comprises winding (810) the first sheet (104, 404, 504, 604) and the second sheet (106, 406, 506, 606) around the preform (902) at angles that are not perpendicular to an axis of rotation of the preform (902).
